# EUROPEAN PATENT SPECIFICATION

(11) **EP 3 716 167 B1**
(45) Date of publication and mention of the grant of the patent: **11.12.2024**
(21) Application number: 20159968.5
(22) Date of filing: 28.02.2020
(51) Int. Cl.: G06Q 10/0631, G07C 1/20

(54) **SYSTEMS AND METHODS OF TRACKING DISTRIBUTED TASKS**
SYSTEME UND VERFAHREN ZUR VERFOLGUNG VERTEILTER AUFGABEN
SYSTÈMES ET PROCÉDÉS DE SUIVI DE TÂCHES DISTRIBUÉES

(30) Priority: 27.03.2019 US 201916366474
(43) Date of publication of application: 30.09.2020
(73) Proprietor: Malikie Innovations Limited, Dun Laoghaire, Dublin A96 VR66 (IE)
(72) Inventor: DALABIRAS, Peter, Waterloo, Ontario N2K 0A7 (CA); AYOUB, Sameh, Waterloo, Ontario N2K 0A7 (CA); KUGLER, Andrew, Waterloo, Ontario N2K 0A7 (CA)
(74) Representative: MERH-IP Matias Erny Reichl Hoffmann Patentanwälte PartG mbB

(56) References cited:
- WO-A1-2013/023283
- WO-A1-2015/183401
- US-A1- 2006 248 167
- US-A1- 2013 195 285

## Description

### FIELD

The present application generally relates to distributed task tracking and, in particular, to systems and methods for tracking distributed tasks across a facility including two or more facility zones.

### BACKGROUND

Facilities such as homes, office buildings, shopping malls, or the like, can be subdivided into two or more rooms. A facility operator can delegate or undertake numerous tasks for operating or maintaining a facility. A distributed task, for example relating to facility operation or maintenance, can include a collection of tasks that are assigned or associated with respective rooms of the facility. For example, a security guard may be tasked with visiting and checking on the status of the two or more rooms (e.g., building security rounds) based on a schedule. In another example, a building maintenance technician may be tasked with replacing incandescent light bulbs with light emitting diode (LED) bulbs for each of the two or more rooms in a facility. Other examples of distributed tasks include scenarios where task portions associated with geographically separated locations that are intended to be completed over time are contemplated. As the above described tasks are distributed in nature, systems and methods of tracking distributed tasks based on input received at a time that the respective task portions are completed are desirable.
US 2006/ 248167 A1 discloses a system that utilizes wireless devices as guard tour data collection and transmission devices. The wireless devices have the capability of reading various types of checkpoints. The wireless devices transmit collected data to a computer via a cellular telephone communication system and either a land-based telephone network or the Internet or a cellular data communication device. Alternatively, a Wi-Fi network or the Wi-Fi network and the Internet can be used to transmit the collected data to the computer. The computer stores and processes the data according to guard tour expected performance parameters, such as rules, schedules and exceptions, and then generates the necessary commands to produce exception notifications and reports at various types of peripheral equipment.
WO 2013/ 023283 A1 discloses a computer readable memory and system that are provided for an audit tool for smartphone devices. A workflow defining a plurality of tasks is defined. Each task is associated with an input identifier which may be defined by a QR code or a RF tag, or both. The smartphone device provides the ability to determine the input identifier that is associated with the task and an input device required to scan the input identifier. The audit tool is utilized in a guard tour, compliance audit or as a check-in verification. The flexibility of using a smartphone device enables reduced cost and flexible deployment.
WO 2015/ 183401 A1 discloses systems and processes for using a virtual assistant to control electronic devices. In one example process, a user can speak an input in natural language form to a user device to control one or more electronic devices. The user device can transmit the user speech to a server to be converted into a textual representation. The server can identify the one or more electronic devices and appropriate commands to be performed by the one or more electronic devices based on the textual representation. The identified one or more devices and commands to be performed can be transmitted back to the user device, which can forward the commands to the appropriate one or more electronic devices for execution. In response to receiving the commands, the one or more electronic devices can perform the commands and transmit their current states to the user device.
US 2013/ 195285 A1 discloses receiving a speech from a speaker proximate to one or more microphones within an environment. The microphones can be a directional microphone or an omni-directional microphone. The speech can be processed to produce an utterance to determine the identity of the speaker that can be associated with a voiceprint and/or with a user's credentials of a computing system to uniquely identify the user within the computing system. The utterance can be analyzed to establish a zone in which the speaker is present. The zone can be a bounded region within the environment. The zone can be mapped within the environment to determine a location of the speaker. The location can be a relative or an absolute location.

### BRIEF DESCRIPTION OF THE DRAWINGS

Reference will now be made, by way of example, to the accompanying drawings which show example embodiments of the present application, and in which:
FIG. 1 diagrammatically illustrates a system for tracking distributed tasks at a facility, in accordance with an example of the present application;
FIG. 2 illustrates a top plan view of an example facility, in accordance with an example of the present application;
FIG. 3 illustrates, in flowchart form, a method of tracking distributed tasks at a facility, in accordance with an example of the present application;
FIG. 4 illustrates, in flowchart form, a method of conducting tasks at a facility, in accordance with an example of the present application;
FIG. 5 illustrates, in simplified block diagram form, an electronic device, in accordance with an example of the present application; and
FIG. 6 illustrates, in simplified block diagram form, a server, in accordance with an example of the present application.

Similar reference numerals may have been used in different figures to denote similar components.

### DESCRIPTION OF EXAMPLE EMBODIMENTS

The present invention is set forth in independent claim 1, independent method claim 8 and a non-transitory computer-readable storage medium claim 11. Preferred embodiments are defined by the dependent claims.

In a first example that is not covered by the claims but useful for understanding the invention, the present application describes a system for tracking a distributed task at a facility, the facility including two or more facility zones, each respective facility zone being associated with a respective acoustic device of a plurality of network-connected acoustic devices. The system comprises: a communication module; a processor coupled to the communication module; and memory coupled to the processor storing processor executable instructions. The processor executable instructions, when executed, cause the processor to: receive, from one of the plurality of network-connected acoustic devices, a first signal representing first speech input data; determine that the first signal is received from a first acoustic device associated with a first facility zone; determine that the first speech input data is associated with a first user; identify an open task record associated with the first user, the open task record including at least one open task associated with the first facility zone; and update the open task record based on the first speech input data associated with the first facility zone.

In another example that is not covered by the claims but useful for understanding the invention, the present application describes a method of tracking a distributed task at a facility, the facility including two or more facility zones, each facility zone being associated with a respective acoustic device of a plurality of network-connected acoustic devices. The method comprises: receiving, from one of the plurality of network-connected acoustic devices, a first signal representing first speech input data; determining that the first signal is received from a first acoustic device associated with a first facility zone; determining that the first speech input data is associated with a first user; identifying an open task record associated with the first user, the open task record including at least one open task record associated with the first facility zone; and updating the open task record based on the first speech input data associated with the first facility zone.

In yet a further example that is not covered by the claims but useful for understanding the invention, the present application describes non-transitory computer-readable storage medium storing processor-readable instructions that, when executed, configure a processor to perform one or more of the methods described herein. In this respect, the term processor is intended to include all types of processing circuits or chips capable of executing program instructions.

Other aspects and features of the present application will be understood by those of ordinary skill in the art from a review of the following description of examples in conjunction with the accompanying figures.

In the present application, the terms "about", "approximately", and "substantially" are meant to cover variations that may exist in the upper and lower limits of the ranges of values, such as variations in properties, parameters, and dimensions. In a non-limiting example, the terms "about", "approximately", and "substantially" may mean plus or minus 10 percent or less.

In the present application, the term "and/or" is intended to cover all possible combinations and sub-combinations of the listed elements, including any one of the listed elements alone, any sub-combination, or all of the elements, and without necessarily excluding additional elements.

In the present application, the phrase "at least one of ... or..." is intended to cover any one or more of the listed elements, including any one of the listed elements alone, any sub-combination, or all of the elements, without necessarily excluding any additional elements, and without necessarily requiring all of the elements.

The present application relates to systems and methods of tracking distributed tasks at a facility. A facility can be a building and the building can be divided into two or more zones. For example, a facility can be a home, an office building, a shopping mall, an amusement park, or the like. Examples of zones can include a room, a sub-divided area, a building floor, or the like. A distributed task can be defined by a building operator or building owner, where the distributed task can include one or more task portions associated with each of two or more zones. Accordingly, a distributed task may include a collection of task portions, where the individual task portions may be associated with geographically separated locations. Further, the collection of task portions may be intended to be completed over time by one or more delegated users.

To illustrate, a building security round may be conducted by a security guard. The security guard may be tasked with visiting the plurality of zones in the facility to verify that the respective zones are uninterrupted or secure (e.g., not broken into by thieves, etc.). The distributed task may include two or more task portions, where each respective task portion may correspond to a task associated with a particular zone of the facility. Visiting a particular zone and marking that particular zone as secure may be a task portion associated with that particular zone. In some examples, the respective building rooms or zones may each include one or more machine-readable indicium at respective entranceways. While conducting security checks of building rooms, a security guard may utilize a mobile device that includes a barcode scanner (or similar capability) for detecting machine-readable indicium. While visiting the respective building rooms, the security guard may utilize the mobile device to scan or capture an image of the machine-readable indicium at each of the respective doorways to record the visit at that particular room by the security guard.

The above-described example of tracking distributed tasks require specialized or specific tools or devices. Further, in scenarios where visits to each of the respective building rooms (e.g., zones) are meant to be conducted by specially trained security guards, the above-described examples of tracking distributed tasks fail to prevent a trained security guard from delegating the distributed task to another person.

In accordance with some aspects of the present application, systems and methods of tracking distributed tasks at a facility are provided. The facility includes two or more facility zones. Each of the respective facility zones may include an acoustic device, such as a smart speaker device or the like. The respective acoustic devices may be network-connected and may be configured to communicate with a distributed task server and/or with other acoustic devices associated with facility zones. As will be described, acoustic devices described herein can detect acoustic input provided by a user who visits respective zones and interact with the user for tracking distributed tasks being performed by the user across the plurality of facility zones.

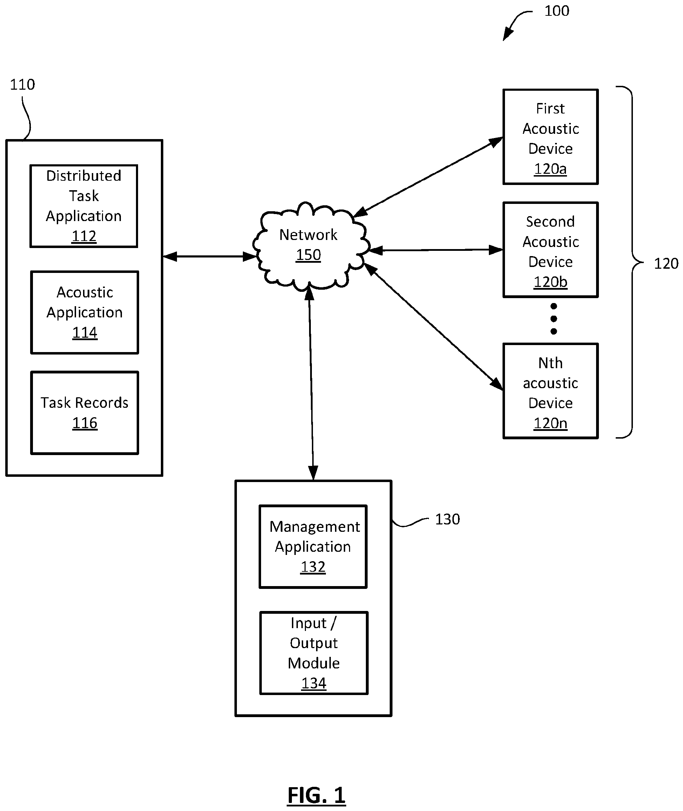

Reference is made to FIG. 1, which illustrates, in block diagram form, a system 100 for tracking distributed tasks at a facility, in accordance with an example of the present application. The facility can include two or more facility zones. For example, the facility can be a building and the building can be sub-divided into two or more rooms or zones.

The system 100 can include a server 110 and a plurality of network-connected acoustic devices 120 (illustrated individually as 120a, 120b, ... 120n). The system 100 also includes a network 150. The server 110 may be configured to communicate with the plurality of network-connected acoustic devices 120 over the network 150. The network 150 can include one or a combination of interconnected wired or wireless networks, including the Internet, wireless local area networks, wireless area networks, short-range communication networks, or the like.

As described, the facility can include two or more facility zones and each respective facility zone can be associated with a respective acoustic device of a plurality of network-connected acoustic devices 120. In FIG. 1, each respective acoustic device can communicate with the server 110 over the network 150.

In some examples, the plurality of network-connected acoustic devices 120 can be configured as a mesh network (not illustrated in FIG. 1). For example, the first acoustic device 120a may communicate with the second acoustic device 120b via a short-range communication channel between the acoustic devices. In the present example, in the event that the second acoustic device 120b may be unable to communicate with the server 110 via the network 150, the second acoustic device 120b may communicate with the server 110 via a communication path including the first acoustic device 120a and the network 150.

The server 110 may be a single server, multiple servers, a server farm, or any other such arrangement of computing devices to implement computing server-like functionality. The server 110 includes one or more processors, memory, and a communication module for providing communications capability with other computing devices, such as the acoustic devices 120 described herein. The server 110 includes processor executable instructions stored in memory that, when executed, cause a processor to track distributed tasks at a facility.

The server 110 can include a distributed task application 112 having processor executable instructions stored in memory that, when executed, cause a processor to conduct operations described herein for tracking a distributed task at a facility. For example, the processor executable instructions can configure the processor to receive a first signal representing first speech input data. The processor can determine that the first signal is received from a first acoustic device associated with a first facility zone and determine that the first speech input data is associated with a first user. The processor can identify an open task record associated with the first user, where the open task record includes at least one open task associated with the first facility zone and update the open task record based on the first speech input data. Other example operations associated with the distributed task application 112 are described herein.

The server 110 can include an acoustic application 114. The acoustic application 114 can include processor executable instructions for receiving signals from the plurality of acoustic devices 120 and for decoding and processing acoustic signals. For example, the acoustic application 114 can include instructions for converting speech-to-text based on acoustic signals. The acoustic application 114 can also include instructions for processing received acoustic commands and conducting operations based on the received acoustic commands. Other acoustic related operations are contemplated.

The server 110 may include one or more task records 116. A task record 116 may be characterized as data structures for storing data relating to a particular distributed task, data indicating whether the distributed task has been completed, or other received data for tracking the distributed task at the facility. As an example, the facility can be a building having two or more facility zones (e.g., rooms or sub-divided areas). The server 110 can store a task record having two or more data fields, where each data field may correspond to one of two or more field facility zones. The respective data fields may store data associated with whether a task portion at a particular facility zone is complete and may store data associated with information about the particular facility zone at a particular point in time.

As an example, a security guard may be tasked with visiting and making notes about the status of each of two or more zones (e.g., rooms) in a facility. Thus, each visit to a zone may be associated with a task portion. The distributed task may be defined as the collection of the two or more task portions associated with respective zones. In the present example, the server 110 may store a task record that defines the distributed task assigned to the security guard and may successively update the task record as the security guard visits each zone in the facility. The server 110 may update the task record based on speech input data received from each respective acoustic devices associated with the respective zones.

A task record 116 may be associated with a particular user. For example, the task record 116 may be assigned to a particular security guard. Facility operators may find it desirable to assign a particular distributed task to a person who may be trained in conducting a security check of a facility. For instance, a security check of a facility, such as a large diamond mining institution, may require that a security guard understand how to determine whether particular facility zones are secure. As will be described, it may be desirable to configure the server 110 to update the task record 116 based on data input received from an assigned user and to disregard data input received from non-assigned users.

FIG. 1 includes illustration of a first acoustic device 120a, a second acoustic device 120b, and an Nth acoustic device 120n; however, the system 110 can include any number of acoustic devices. Each facility zone can include an acoustic device located therein. That is, a first facility zone can be associated with the first acoustic device 120a and the first acoustic device 120a can receive acoustic input that is generated from within the first facility zone. In some other examples, a facility zone can include two or more acoustic devices therein. Where a facility zone may be particularly large, the facility zone can include two or more acoustic devices for concurrently detecting and receiving acoustic input for that particularly large facility zone.

The acoustic devices 120 can be smart speaker devices that can receive and process acoustic input or voice commands and conduct an operation based on the received acoustic input. For example, an acoustic device can include a microphone device that receives acoustic input. Further, the acoustic device can include an output transducer, such as a loudspeaker, for playback of acoustic signals. To illustrate, the acoustic devices 120 can be any one or a combination of smart speaker devices, such as devices known as Amazon Echo ^{™}, Apple HomePod^{™}, Google Home^{™}, Sonos One^{™}, or like devices. It can be appreciated that acoustic devices 120 can be other computing devices having a microphone device, a loudspeaker device, and computing functionality for receiving voice commands, executing voice commands, and/or providing acoustic feedback.

In some examples, the system 100 can include a remote device 130. The remote device 130 can store and execute a management application 132 having instructions for connecting with the server 110 and interacting with the distributed task application 112. The remote device 130 includes one or more processors, memory, and a communication module for providing communication capability with other computing devices.

The remote device 130 can include an input / output module 134. For example, the input / output module 134 can include a display for presenting a user interface and a touch screen interface for receiving motion or touch input from a user of the remote device 130. Other examples of the input / output module 134 for displaying content for a user or for receiving input signals representing commands or selectable options for a user of the electronic device 160 are contemplated.

In some examples, the remote device 130 can be associated with a facility operator or facility owner. The facility operator or facility owner may utilize the remote device 130 for receiving updates when tracking distributed tasks at a facility. For instance, the facility operator may want to manage security guard visits to two or more zones and to verify that the zones within the facility are secure. A task record may be created for tracking the productivity of a particular security guard who may be assigned to conduct zone visits throughout the facility at a particular time on a particular day. Further, the task record may be associated with time thresholds, where the time thresholds are associated with the maximum amount of time that the facility operator anticipates the security guard may use for completing the distributed task. In the event that the distributed task associated with the task record is not complete before the maximum time threshold, the remote device 130 may receive a notification that one or more open tasks of the task record are overdue. Overdue tasks may indicate that the security guard undertaking the distributed task may have been disrupted. Thus, the remote device 130 may receive the notification that the one or more tasks are overdue and, in some examples, the user of the remote device 130 may initiate an investigation.

In other examples, the remote device 130 can receive input for defining a distributed task, for generating a task record associated with the distributed task, and transmitting the generated task record to the server 110 for storage with task records 116. It can be appreciated that the management application 132 can perform other operations.

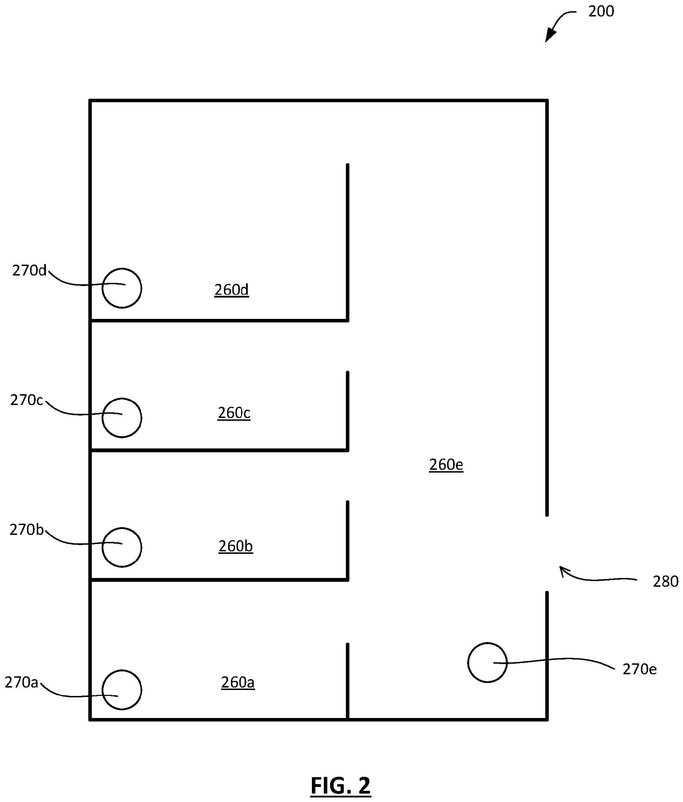

Reference is made to FIG. 2, which illustrates a top plan view of an example facility 200, in accordance with an example of the present application. The facility 200 can be subdivided to include two or more facility zones. In FIG. 2, the illustrated facility 200 includes a first facility zone 260a, a second facility zone 260b, a third facility zone 260c, a fourth facility zone 260d, and a fifth facility zone 260e.

A facility zone can be associated with a room (e.g., first facility zone 260a, second facility zone 260b, third facility zone 260c, or fourth facility zones 260d) having an entranceway. In some other examples, a facility zone can be a designated portion (e.g., fifth facility zone 260e) of the facility 200, such as a corridor or a hallway leading to one or more other facility zones.

Each respective facility zone can be associated with a respective acoustic device of a plurality of network-connected acoustic devices 120 (FIG. 1). For example, the first facility zone 260a may have a first acoustic device 270a located therein. The first facility zone 260a is associated with the first acoustic device 270a. Similarly, the second facility zone 260b, the third facility zone 260c, the fourth facility zone 260d, and the fifth facility zone 260e can be associated with a second acoustic device 270b, a third acoustic device 270c, a fourth acoustic device 270d, and a fifth acoustic device 270e, respectively.

In FIG. 2, the example acoustic devices (illustrated individually as 270a, 270b, 270c, 270d, 270e) may communicate with the server 110 (FIG. 1) via the network 150 (FIG. 1). In some other examples, the respective acoustic devices may also communicate with other acoustic devices in a mesh network configuration.

Continuing with the security guard example, in FIG. 2, a data record may define a distributed task, where the distributed task may require that a security guard physically visit and check the state of the two or more facility zones of the facility 200.

For example, the server 110 may be configured to generate a task record 116 to define a distributed task involving a security check of a building. The distributed task may require that the security guard visit each of the two or more facility zones (illustrated individually as 260a, 260b, 260c, 260d, and 260e). Further, while the security is physically at each zone, the distributed task may require that the security guard provide an acoustic input to indicate that the zone has been visited. The acoustic input can further include information relating to the condition or status of the zone. For example, the security guard may talk aloud and confirm via voice that all windows are locked and that small electrical appliances within each zone are powered off. Thus, an example task record 116 can include a data entry associated with each of the facility zones for storing acoustic data received from respective acoustic devices 120. Further, the data entries can include data, such as one or more indicators that a room was checked, details of the condition of the room, or any other type of data that may be associated with a task or the zone.

In some examples, the distributed task can include a desired order that particular tasks be conducted. For example, the task record 116 can prescribe a sequential order that the security guard shall use to visit each of the two or more zones. That is, the task record 116 can include a data entry listings that begins with a data field associated with the first facility zone 260a followed by the second facility zone 260b, the third facility zone, 260c, etc. For instance, the security guard may enter an entranceway 280 of the facility 200 and proceed to sequentially visit the first facility zone 260a, the second facility zone 206b, the third facility zone 260c, etc.

It can be appreciated that, in FIG. 2, each facility zone is associated with a single acoustic device; however, in some examples, a facility zone can be associated with two or more acoustic devices. The facility 200 can include greater or lesser number of facility zones than that illustrated in FIG. 2.

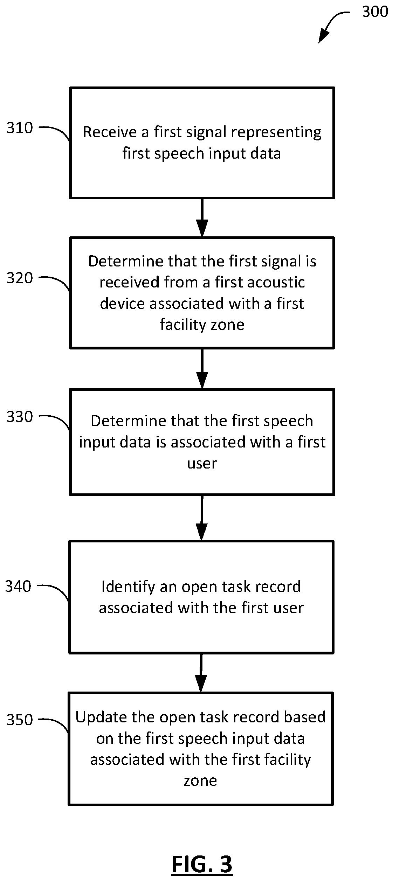

Reference is made to FIG. 3, which illustrates, in flowchart form, a method 300 of tracking distributed tasks at a facility, in accordance with an example of the present application. The method 300 includes operations that are carried out by one or more processors of the server 110 (FIG. 1). The method 300 may be implemented, at least in part, through processor executable instructions associated with the distributed task application 112 (FIG. 1). In some examples, one or more operations may be implemented via processor-executable instructions in other applications or in an operating system stored and executed in memory of the remote server 110.

To illustrate features of the present application, operations of the method 300 are discussed alongside an example. A security guard named "John" may be responsible for visiting and ensuring that two or more facility zones are secure (e.g., distributed task). The task may be distributed in the sense that the overall task of visiting several portions of a facility 200 (FIG. 2) involves several task portions that are conducted respectively at facility zones spread throughout the facility 200. The distributed task may be tracked by a task record. In the present example, until such time that the task record is updated to include data indicating that the task portions as a collective whole are complete, the task record may be identified as an open task record.

At operation 310, the processor receives, from one of the plurality of network-connected acoustic devices 120 (FIG. 1), a first signal representing first speech input data. For example, the security guard may enter the facility 200 of FIG. 2 via an entranceway 280 and begin by visiting the first facility zone 260a (FIG. 2). When the security guard is within the first facility zone 260a, the security guard may verbally say aloud: "room is secure". The verbally articulated expression "room is secure" may correspond to first speech input data.

The first acoustic device 270a (FIG. 2) may detect the acoustic input "room is secure", generate the first signal representing the first speech input data, and transmit the first signal to the server 110. In the present example, the security guard begins by visiting the first facility zone 260a. However, it can be understood that the security guard can begin by visiting any other facility zone in any other sequence.

In the present example, the security guard provides acoustic input for contributing to a task record associated with the distributed task. The server 110 can utilizing the acoustic input to update the task record thereby ameliorating the need for specialized devices, such as a mobile device for scanning machine readable indicium located in the respective facility zones.

At operation 320, the processor determines that the first signal is received from a first acoustic device 270a associated with the first facility zone 260a. As described, the first acoustic device 270a may communicate with the server 110 via the network 150. Accordingly, when the processor receives a signal from the first acoustic device 270a, the server 110 can identify that the first signal representing the first speech input is received from the first acoustic device 270a and is associated with a user who provided the acoustic input while within the first facility zone 260a.

As the server 110 can identify that signals originate from particular acoustic devices, in some examples, the security guard need not include facility zone or location information with acoustic input. That is, because the server 110 can identify from which acoustic device a signal originates, the security guard need not say "room number one is secure".

At operation 330, the processor determines that the first speech input data is associated with a first user. In some examples, the processor can conduct voice-printing or voice recognition operations to identify that the first speech input data may have been provided by John, the security guard. The processor can analyze the received acoustic input and determine, based on stored voice samples associated with John the security guard, that the acoustic input is from John. In some examples, the acoustic application 114 (FIG. 1) can conduct voice recognition operations based on voice samples of authorized users that may be stored in a voice sample database.

The above example describes voice recognition operations being performed at the server 110; however, in some other examples, the voice recognition operations may be conducted at an acoustic device. The acoustic device can determine that the first speech input data is associated with the first user and transmit, via the network 150, an indication that the first speech input data is associated with the first user.

In the scenario where the processor is unable to associate the first speech input data to a known user, the processor may transmit a response signal for playback on the first acoustic device 270a. For example, the response signal may represent an acoustic output "Sorry, unable to identify a user who is authorized to complete the distributed task". Further, in the scenario where the processor identifies that the first speech input data is associated with a second user who is not assigned to the distributed task being tracked, the processor may identify that second user and associate the speech input data with that second user. That is, in subsequent operations, the processor may update an open task record by identifying that the speech input data is associated with the second user.

In some examples, the first acoustic device 270a may include a biometric input module, such as a fingerprint sensor or a retinal scanning sensor, or an image capture device. In the scenario where the processor is unable to associate the first speech input data to a known user, in some examples, the processor may receive fingerprint data, retinal data or image data of the user for conducting at least one of fingerprint recognition, retinal recognition, or facial recognition of John. Other examples of input modules for identifying the user when the processor may be unable to associate the first speech input data to a known user are contemplated.

At operation 340, the processor identifies an open task record associated with the first user. In the present example, the first user is John the security guard. The open task record includes at least one open task associated with the first facility zone 260a. Further, the open task record may be associated with John and may identify John's responsibility to visit each of facility zones of the facility 200. As John may not have finished visiting the group of facility zones of the facility 200 in FIG. 2, the processor identifies the task record associated with John's current responsibilities as "open". Further, as John may not have previously visited the first facility zone 260a, the processor identifies the open task record as including an open task associated with the first facility zone 260a.

At operation 350, the processor updates the open task record based on the first speech input data associated with the first facility zone. For example, based on the previously received acoustic input "room is secure", the processor may update the open task record to indicate that the first facility zone 260a has been checked and is secure. In some examples, the open task record may also be updated with date / time stamps associated with the completed task portion.

As John the security guard continues to successively visit the remaining facility zones (e.g., second facility zone 160b, third facility zone 160c, etc.), the processor may conduct operations of method 300 to track the remaining open task portions of the distributed task for the facility 200. For instance, when John the security guard visits the second facility zone 160b, the processor may: (a) receive a further signal representing further speech input data; (b) determine that the further signal is received from the second acoustic device 270b associated with the second facility zone 260b; (c) determine that the further speech input data is associated with the first user (e.g., John the security guard); (d) identify the open task record associated with John; and (e) update the open task record based on the further speech input data associated with the second facility zone 260b. That is, the processor can update the open task record to indicate that the second facility zone 260b has been checked and is secure.

As John further continues to visit the last facility zone (e.g., fifth facility zone 160e) and when the processor updates the open task record to indicate that the fifth facility zone 260b has been checked and is secure, the server can conduct operations to provide notification that the distributed task associated with the open task record of the facility 200 is complete. For example, the processor may determine an absence of open tasks in the open task record that is associated with the first user. Further, the processor may transmit, for playback on the first acoustic device 260a or for playback on any of the other acoustic devices, a final acoustic signal representing a notification that the distributed tasks associated with the open task record are complete. For example, once the processor determines that John the security guard has completed the requisite visits to the respective facility zones, the server 110 may provide an acoustic indication that the task is completed. The examples described above relate to a persistent task at the facility 200, where the server 110 receives acoustic input from the plurality of acoustic devices for tracking successively completed task portions that endure over a duration of time.

Referring again to operation 310, the processor receives a first signal representing first speech input data. The first speech input data can include speech input indicating that the first facility zone is secured (e.g., described in the example above) or that the first facility zone is unsecured. For example, in the scenario that John the security guard visits the first facility zone 260a and finds a room window completely open, John may verbally say aloud "room is not secure" and that "a window is unexpectedly broken". In other examples, the user can utilize other spoken expressions for providing acoustic input.

In the scenario where John may find that the room is not secure or that a window is unexpectedly broken, John may provide additional acoustic input for initiating further operations. For example, the first acoustic device 270a may include an image capture device and, in response to receiving the additional acoustic input, the processor may cause the image capture device to capture images of the first acoustic zone for documenting the current state of the zone. The processor may transmit the captured images to the remote device 130 such that a building operator can be notified of the state of the first acoustic zone. Further, the processor may cause the image capture device to capture video when further motion is detected in the first acoustic zone to document further interruptions to the first acoustic zone (e.g., an unexpected person entering the building through the broken window).

Continuing with the present example, the processor can determined, based on the first signal, that the first facility zone 260a is unsecured based on the first speech input data. For instance, the processor can determine that the first facility zone 260a is unsecured based on the expression "room is not secure" or "a window is broken". The processor can transmit, to the remote device 130, a notification that the first facility zone is unsecured. In some examples, the notification can prompt an investigation based on a concern that a window is unexpectedly broken. In some examples, the notification can be an alphanumeric message displayed on an output module of the remote device 130. In some examples, the notification can be an acoustic message that is played back by an output module of the remote device 130, such as a voice message or a sound indication that a facility operator's attention is required. As described, the remote device 130 can be associated with a facility operator for tracking distributed tasks at the facility 200.

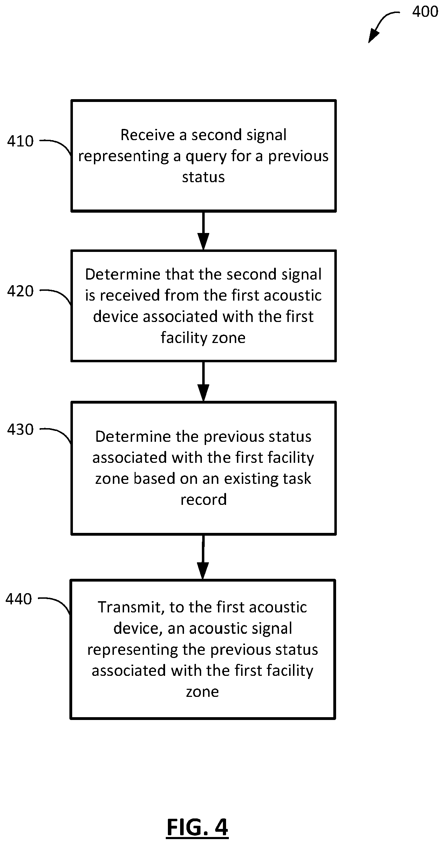

In some other examples, as John the security guard is visiting the respective facility zones, John may vocally provide acoustic input that includes: "the windows are confirmed to be closed", "computer monitors in the room are turned off', and/or "the office is clear of laptop computers". The server 110 can receive the additional speech input data, process the additional speech input data to identify additional data points associated with the first facility zone 260a, and store the additional data points associated with the first facility zone 260a in the open task record. The additional data points can be associated with date / time stamps and can, subsequently, be retrieved for discrete tasks requested by a user, as will be described with reference to FIG. 4. As John the security guard is visiting a facility zone, a respective acoustic device may receive voice queries from John while John is checking the status of the first facility zone.

Reference is made to FIG. 4, which illustrates, in flowchart form, a method 400 of conducting tasks at a facility, in accordance with an example of the present application. The method 400 includes operations that are carried out by one or more processors of the server 110 (FIG. 1). The method 400 may be implemented, at least in part, through processor executable instructions associated with the distributed task application 112 (FIG. 1). In some examples, one or more operations may be implemented via processor-executable instructions in other applications or in an operating system stored and executed in memory of the remote server 110.

In some examples, the operations of method 400 can be conducted prior to, simultaneously with, or following the operations of method 300 (FIG. 3). For example, when John the security guard is visiting the first facility zone 260a, John may vocally interact with the first acoustic device 270a by making queries regarding the state of the first facility zone 260a. For example, John may notice that a laptop computer sits on an office desk, that the laptop computer is unsecured to the desk, and that the laptop computer screen includes an active spreadsheet document containing seemingly confidential information.

At operation 410, the processor receives a second signal representing a query for a previous status. For example, John the security guard may verbally say aloud: "An open and unsecured laptop has been found. Who was last in this room?" By receiving subsequent signals corresponding to discrete tasks or queries, John is able to query, in real time or in near-real time, for information to address a potential security risk at the facility 200.

At operation 420, the processor determines that the second signal is received from the first acoustic device 270a associated with the first facility zone 260a. That is, when the processor receives the second signal from the first acoustic device 270a, the server 110 can identify that the second signal is received from the first acoustic device 270a. Further, in some examples, the processor can determine, based on voice recognition operations, that the received query may be received from John. It may be desirable to determine that the received query was received from an authorized user (e.g., John the security guard authorized to interact with the server 110) because responses to the queries may contain confidential or sensitive information regarding the security or status of the facility 200. That is, the processor may provide a response acoustic signal when the second signal is identified as being associated with John. In some examples, the responses to the queries may be provided based on permissions granted to the authorized user. For instance, although John the security guard may be authorized to interact with the server 110, John may not have sufficient permissions to query for any data that may be stored at the server 110. John may only have sufficient permissions to query a subset of the data stored at the server 110. For instance, John may have sufficient permissions to query the category of person who was last in the room (e.g., an employee, unregistered user, etc.) but may not have sufficient permissions to query for specific details, such as name, of the person who was last in the room.

At operation 430, the processor determines the previous status associated with the first facility zone 260a based on an existing task record. For example, a response to John's query of "... who was last in this room?" may be recorded in an existing data record stored at the server 110. For example, the existing data record can be a prior task record that includes data identifying the previously assigned security guard who visited the first facility zone 260a. In another example, the existing data record can be a data record storing records of users who spoke aloud while in the first facility zone 260 and who have been identified, based on voice samples stored at the server 110, using voice recognition operations. That is, prior to John entering the first facility zone 260a, an office staff member named Jamie may have been talking on the telephone or may have been talking to a colleague and may have forgotten to secure the laptop computer before running to a restaurant to retrieve dinner. Accordingly, the existing data record may include a data entry identifying the office staff member as being in the first facility zone 260a at a time specified by a timestamp. The processor, at operation 430, can determine that Jamie was the last recognized user who was detected in the first facility zone 260a.

At operation 440, the processor transmits, to the first acoustic device, an acoustic signal representing the previous status associated with the first facility zone 260a. Continuing with the above example, the processor may transmit an acoustic signal representing an acoustic output: "Jamie with employee number 12345 was last in the room, 45 minutes ago". In the present example, the server 110 can receive and respond to discrete acoustic queries alongside one or more persistent tasks associated with an open task record.

In some examples, the first acoustic device 270a may include an image capture device for capturing images or video and a display output module for playing back images. The image capture device may be configured to capture images or video in response to detecting motion in the first acoustic zone 260a. In some examples, in response to John's query of "... Who was last in this room?", the processor may additionally play back video, via the display output module, depicting the first acoustic zone 260a at a prior point in time to provide additional information to John regarding "Who was last in this room?". The visual data may be helpful in the event that the processor is unable to identify, via acoustic data, with a threshold level of certainty the person who was last in the first acoustic zone 260a.

Referring still to FIG. 4, although the second signal is described as being received by the first acoustic device 270a, it can be understood that the server 110 can receive the second signal from any other acoustic device in the plurality of network-connected acoustic devices. That is, the server 110 can receive acoustic input signals representing one or more discrete acoustic queries from any of the network-connected acoustic devices 120 (FIG. 1) when John the security guard is visiting the successive facility zones of the assigned distributed task. In response to a discrete acoustic queries, the server 110 can transmit, to the acoustic device from which the discrete acoustic query was received, a response to the discrete acoustic query for playback on that acoustic device.

Individual task records 116 stored at the server 110 may be associated with individual distributed tasks. For example, the server 110 may store a first task record associated with a distributed task for John the security guard to visit the respective zones of the facility 200 at 7 pm. A second task record may be associated with a subsequent distributed task for John the security guard to visit the respective zones of the facility at 9 pm. Thus, in some examples, the server 110 may store a task record for respective successive rounds of tasks.

In some examples, the respective task records 116 may be associated with time thresholds. The time thresholds can be based on the expected maximum duration of time that an assigned task owner (e.g., John the security guard) will spend on the distributed task or will spend on the respective task portions of the distributed task. For example, when the respective task records 116 for defining distributed tasks for John the security guard to visit the respective zones of the facility may be associated with a two hour time threshold.

Continuing with the above example, the server 110 can conduct operations for determining that an open task record is pending for a time greater than the maximum time threshold (e.g., 2 hour time threshold). When the server 110 determines that the open task record continues to be pending beyond a 2 hour time threshold, the server 110 can transmit, to at least one of the plurality of network-connected acoustic devices 120 or the remote device 130 (FIG. 1) a time signal representing a notification that at least one open task associated with the open task record is overdue. The above example operations may be conducted periodically and simultaneously with example operations described with reference to FIG. 3 and FIG. 4 for ensuring the safety of the assigned user. For instance, if John the security guard has failed to complete the task within the 2 hour time threshold, the server 110 may transmit a notification to a facility operator to investigate whether John was injured while conducting a search of the facility. In another instance, the above described example operations may be conducted to monitor productivity of the assigned user (e.g., ensuring John is not sleeping on the job).

In some further examples, it may be desirable to provide an assigned distributed task user with feedback in the event that task portions may have been missed. In some scenarios, an open task record can include successive task portions associated with consecutively ordered facility zones. Referring again to the example facility 200 of FIG. 2, an open task record can include an ordered list of suggested facility zones that John the security guard is to visit and to report as secure or unsecure. The example open task record may include an ordered list of facility zones: first facility zone 260a, second facility zone 260b, ..., fifth facility zone 260e.

Continuing with the above example, while John the security guard is checking on the third facility zone 260c and provides acoustic input representing "room is secure", the server 110 can conduct operations to determine that an open task portion associated with a suspected facility zone is preceded by a completed task associated with a prior facility zone and is succeeded by a completed task associated with a successive facility zone. In the event that John inadvertently failed to visit the second facility zone 260b (e.g., suspect facility zone), the server 110 may determine that an open task associated with the second facility zone 260b: (i) is preceded by a completed task in the first facility zone 260a (e.g., John acoustically reported that the first room is secure); and (ii) is succeeded by a completed task associated with the third facility zone 260c (e.g., John acoustically reported that the third "room is secure").

The server 110 may then transmit, to at least one of the plurality of network-connected acoustic devices, a missed task signal representing a notification that a task was missed in the suspect facility zone (e.g., second facility zone 260b). By promptly notifying the assigned user that an open task in a suspect facility zone may have been missed, the assigned user may not need to back track at the end of the task. Accordingly, the server 110 can provide feedback to the assigned user of the distributed task to assist the assigned user with efficiently and accurately completing the distributed task.

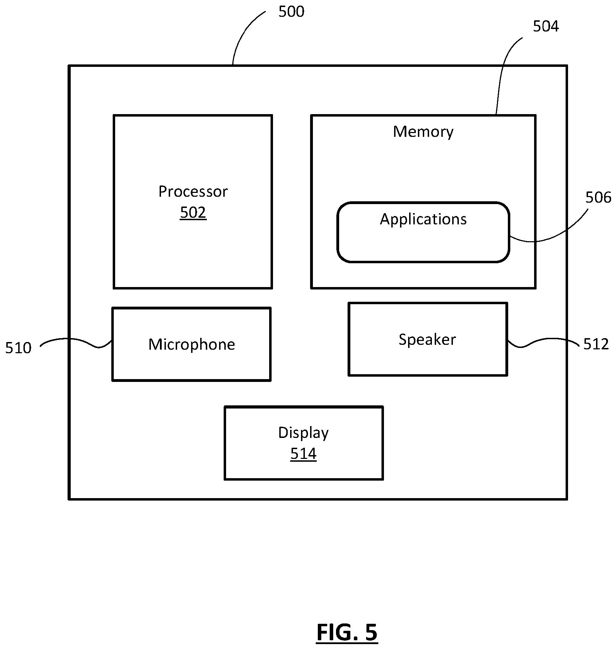

Reference is made to FIG. 5, which illustrates, in simplified block diagram form, an electronic device 500, in accordance with an example of the present application. The electronic device 500 can be the remote device 130 of FIG. 1. In another example, the electronic device 500 can be one of the plurality of network-connected acoustic devices 120 of FIG. 1. The electronic device 500 includes one or more processors 502, memory 504, and a communications module for providing network capabilities to communicate with other computing devices. The memory 504 can store processor executable software applications 506 that may include an operating system to provide basic device operations. The software applications 506 may also include instructions implementing operations of the methods described herein.

The electronic device 500 includes a microphone 510. The microphone 510 can be an electro-mechanical transducer for detecting and receiving acoustic input. The electronic device 500 can also include a speaker 512. The speaker 512 can be a transducer for playing back acoustic signals. The electronic device 500 can include a display interface and/or a display 514. The display 514 can be any suitable display such as a liquid crystal display (LCD), an e-ink / e-paper display, or the like. In some examples, the display 514 is a touchscreen display. In the example where the electronic device 500 is the remote device 130, the electronic device 500 can be a portable electronic device, such as a smartphone, a personal computer, a personal digital assistant, a portable navigation device, a mobile device, a wearable computing device (e.g., smart watch, wearable activity monitor, or the like), or any other type of computing device that may be configured to store data and software instructions, and execute software instructions to perform example operations described herein. In some examples, the electronic device 500 can include an input / output module (not illustrated in FIG. 5) that may correspond to the input / output module 134 in FIG. 1.

In the example where the electronic device is one of the plurality of network-connected acoustic devices 120, the electronic device 500 may be a smart speaker device that can receive, decipher, and execute voice commands. Smart speakers can include any one of devices known as Amazon Echo ^{™}, Apple HomePod^{™}, Google Home^{™}, Sonos One^{™}, or like devices. It can be appreciated that acoustic devices 120 can be other computing devices having a microphone device, a loudspeaker device, and computing functionality for receiving voice commands, executing voice commands, and/or providing acoustic feedback.

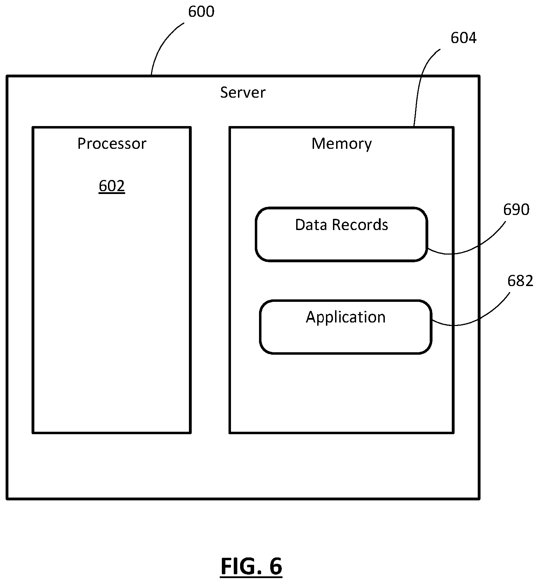

Reference is made to FIG. 6, which illustrates, in simplified block diagram form, a server 600, in accordance with an example of the present application. The server 600 may be the server 110 of FIG. 1. The server 600 includes one or more processors 602, memory 604, and a communications module for providing network capabilities to communicate with other computing devices. The memory 604 may include data records 690. In the example of the server 110 of FIG. 1, the data records can be the task records 116 (FIG. 1).

The memory 604 can also include applications 682 having instructions for performing the operations described herein. In an example of the server 110 of FIG. 1, the applications 682 can include the distributed task application 112 and/or the acoustic application 114 described with reference to FIG. 1.

Example embodiments of the present application are not limited to any particular operating system, system architecture, mobile device architecture, server architecture, or computer programming language.

It will be understood that the applications, modules, routines, processes, threads, or other software components implementing the described method/process may be realized using standard computer programming techniques and languages. The present application is not limited to particular processors, computer languages, computer programming conventions, data structures, or other such implementation details. Those skilled in the art will recognize that the described processes may be implemented as a part of computer-executable code stored in volatile or non-volatile memory, as part of an application-specific integrated chip (ASIC), etc.

Certain adaptations and modifications of the described embodiments can be made. Therefore, the above discussed embodiments are considered to be illustrative and not restrictive.

## Claims

1. A system (100) for tracking a distributed task at a facility, the system including a server (110) and a plurality of network-connected acoustic devices (120) communicating with the server (110) via a network (150), the facility including two or more facility zones, each respective facility zone being associated with a respective acoustic device of the plurality of network-connected acoustic devices (120), the server (110) comprising:
a communication module;
a processor coupled to the communication module; and
memory coupled to the processor storing processor executable instructions that, when executed, cause the processor to:
receive, from one of the plurality of network-connected acoustic devices (120), a first signal representing first speech input data;
determine that the first signal is received from a first acoustic device (120a) associated with a first facility zone;
determine that the first speech input data is associated with a first user by conducting voice-printing or voice recognition operations based on stored voice samples associated with the first user;
identify an open task record associated with the first user, the open task record including at least one open task associated with the first facility zone;
update the open task record based on the first speech input data associated with the first facility zone;
whereby the respective acoustic device includes a microphone device that receives acoustic input and **characterized in that**
the respective acoustic device includes an output transducer for playback of acoustic signals, and
the memory coupled to the processor stores processor executable instructions that, when executed, further cause the processor to:
receive a second signal representing a query for a previous status;
determine that the second signal is received from the first acoustic device (120a) associated with the first facility zone;
determine the previous status associated with the first facility zone based on an existing data record; and
transmit, for playback by the first acoustic device (120a), an acoustic signal representing the previous status associated with the first facility zone.

2. The system (100) of claim 1, wherein the open task record includes two or more tasks, each respective task being associated with a respective facility zone.

3. The system (100) of any previous claim, wherein the first speech input data includes speech input indicating that the first facility zone is at least one of secured or unsecured, and wherein the first speech input data is received from at least one of a security guard or a building operator user.

4. The system (100) of claim 3, wherein the processor executable instructions, when executed, further cause the processor to:
determine that the first facility zone is unsecured based on the first speech input data; and
transmit, to a remote device, a notification that the first facility zone is unsecured.

5. The system (100) of any previous claim, wherein the processor executable instructions, when executed, further cause the processor to:
determine an absence of open tasks in the open task record that is associated with the first user; and
transmit, for playback on at least one acoustic device, a final acoustic signal representing a notification that the distributed tasks associated with the open task record are complete.

6. The system (100) of any previous claim, wherein the open task record is associated with a maximum time threshold, and wherein the processor executable instructions, when executed, further cause the processor to:
determine that the open task record is pending for a time greater than the maximum time threshold; and
transmit, to at least one of the plurality of network-connected acoustic devices (120) or a remote device (130), a time signal representing a notification that at least one open task associated with the open task record is overdue.

7. The system (100) of any previous claim, wherein the open task record includes successive task portions associated with consecutively ordered facility zones, and wherein the processor executable instructions, when executed, further cause the processor to:
determine that an open task associated with a suspect facility zone is preceded by a completed task associated with a prior facility zone and is succeeded by a completed task associated with a successive facility zone; and
transmit, to at least one of the plurality of network-connected acoustic devices (120), a missed task signal representing a notification that a task was missed in the suspect facility zone.

8. A method of tracking a distributed task at a facility, the facility including two or more facility zones, each facility zone being associated with a respective acoustic device of a plurality of network-connected acoustic devices (120) communicating with a server (110) via a network (150), the method comprising:
receiving, at the server (110), a first signal representing first speech input data from one of the plurality of network-connected acoustic devices (120);
determining that the first signal is received from a first acoustic device (120a) associated with a first facility zone;
determining that the first speech input data is associated with a first user by conducting voice-printing or voice recognition operations based on stored voice samples associated with the first user;
identifying an open task record associated with the first user, the open task record including at least one open task record associated with the first facility zone;
updating the open task record based on the first speech input data associated with the first facility zone;
whereby the respective acoustic device includes a microphone device that receives acoustic input and **characterized in that**
the respective acoustic device includes an output transducer for playback of acoustic signals, and
the method further comprises:
receiving a second signal representing a query for a previous status;
determining that the second signal is received from the first acoustic device(120a) associated with the first facility zone; and
transmitting, for playback by the first acoustic device (120a), an acoustic signal representing the previous status associated with the first facility zone.

9. The method of claim 8, wherein the first speech input data includes speech input indicating that the first facility zone is at least one of secured or unsecured.

10. The method of claim 8 or 9, the method further comprising:
determining an absence of open tasks in the open task record that is associated with the first user; and
transmitting, for playback on at least one acoustic device, a final acoustic signal representing a notification that the distributed tasks associated with the open task record are complete.

11. A non-transitory computer-readable storage medium storing instructions for tracking a distributed task at a facility, the facility including two or more facility zones, each facility zone being associated with a respective acoustic device of a plurality of network-connected acoustic devices (120), the instructions, when executed by a processor of a server communicating with the plurality of network-connected acoustic devices (120), causing the server (110) to:
receive, from one of the plurality of network-connected acoustic devices (120), a first signal representing first speech input data;
determine that the first signal is received from a first acoustic device (120a) associated with a first facility zone;
determine that the first speech input data is associated with a first user by conducting voice-printing or voice recognition operations based on stored voice samples associated with the first user;
identify an open task record associated with the first user, the open task record including at least one open task associated with the first facility zone;
update the open task record based on the first speech input data associated with the first facility zone;
whereby the respective acoustic device includes a microphone device that receives acoustic input and **characterized in that**
the respective acoustic device includes an output transducer for playback of acoustic signals, and
the instructions, when executed by the processor of the server (110) communicating with the plurality of network-connected acoustic devices (120), further cause the server (110) to:
receive a second signal representing a query for a previous status;
determine that the second signal is received from the first acoustic device (120a) associated with the first facility zone;
determine the previous status associated with the first facility zone based on an existing data record; and
transmit, for playback by the first acoustic device (120a), an acoustic signal representing the previous status associated with the first facility zone.

## Patentansprüche

1. System (100) zum Verfolgen einer verteilten Aufgabe an einer Einrichtung, wobei das System einen Server (110) und eine Vielzahl von netzwerkverbundenen akustischen Vorrichtungen (120), die über ein Netzwerk (150) mit dem Server (110) kommunizieren, umfasst, wobei die Einrichtung zwei oder mehr Einrichtungszonen umfasst, wobei jede jeweilige Einrichtungszone einer jeweiligen akustischen Vorrichtung der Vielzahl von netzwerkverbundenen akustischen Vorrichtungen (120) zugeordnet ist, wobei der Server (110) Folgendes aufweist:
ein Kommunikationsmodul;
einen Prozessor, der mit dem Kommunikationsmodul gekoppelt ist; und
einen Speicher, der mit dem Prozessor gekoppelt ist, der von einem Prozessor ausführbare Anweisungen speichert, die, wenn sie ausgeführt werden, den Prozessor veranlassen:
von einer der Vielzahl von netzwerkverbundenen akustischen Vorrichtungen (120) ein erstes Signal zu empfangen, das erste Spracheingabedaten darstellt;
zu bestimmen, dass das erste Signal von einer ersten akustischen Vorrichtung (120a) empfangen ist, die einer ersten Einrichtungszone zugeordnet ist;
zu bestimmen, dass die ersten Spracheingabedaten einem ersten Benutzer zugeordnet sind, indem Sprachdruck- oder Spracherkennungsoperationen auf der Grundlage von gespeicherten Sprachproben durchgeführt werden, die dem ersten Benutzer zugeordnet sind;
einen offenen Aufgabendatensatz zu identifizieren, der dem ersten Benutzer zugeordnet ist, wobei der offene Aufgabendatensatz mindestens eine offene Aufgabe enthält, die der ersten Einrichtungszone zugeordnet ist;
den offenen Aufgabendatensatz auf der Grundlage der ersten Spracheingabedaten zu aktualisieren, die der ersten Einrichtungszone zugeordnet sind;
wodurch bzw. wobei
die jeweilige akustische Vorrichtung eine Mikrofonvorrichtung enthält, die eine akustische Eingabe empfängt, und
**dadurch gekennzeichnet, dass**
die jeweilige akustische Vorrichtung Folgendes enthält:
einen Ausgangswandler zur Wiedergabe von akustischen Signalen, und
der Speicher, der mit dem Prozessor gekoppelt ist, von einem Prozessor ausführbare Anweisungen speichert, die, wenn sie ausgeführt werden, den Prozessor ferner veranlassen:
ein zweites Signal zu empfangen, das eine Abfrage nach einem vorherigen Status darstellt;
zu bestimmen, dass das zweite Signal von der ersten akustischen Vorrichtung (120a) empfangen ist, die der ersten Einrichtungszone zugeordnet ist;
den vorherigen Status, der der ersten Einrichtungszone zugeordnet ist, auf der Grundlage eines bestehenden Datensatzes zu bestimmen; und
zur Wiedergabe durch die erste akustische Vorrichtung (120a) ein akustisches Signal zu übertragen, das den vorherigen Status darstellt, der der ersten Einrichtungszone zugeordnet ist.

2. System (100) nach Anspruch 1, wobei der offene Aufgabendatensatz zwei oder mehr Aufgaben enthält, wobei jede jeweilige Aufgabe einer jeweiligen Einrichtungszone zugeordnet ist.

3. System (100) nach einem der vorhergehenden Ansprüche, wobei die ersten Spracheingabedaten eine Spracheingabe enthalten, die angibt, dass die erste Einrichtungszone gesichert und/oder ungesichert ist, und wobei die ersten Spracheingabedaten von einer Sicherheitswache und/oder einem Benutzer eines Gebäudebetreibers empfangen werden.

4. System (100) nach Anspruch 3, wobei die von einem Prozessor ausführbaren Anweisungen, wenn sie ausgeführt werden, den Prozessor ferner veranlassen:
auf der Grundlage der ersten Spracheingabedaten zu bestimmen, dass die erste Einrichtungszone ungesichert ist; und
eine Benachrichtigung, dass die erste Einrichtungszone ungesichert ist, an eine entfernte Vorrichtung zu senden.

5. System (100) nach einem der vorhergehenden Ansprüche, wobei die von einem Prozessor ausführbaren Anweisungen, wenn sie ausgeführt werden, den Prozessor ferner veranlassen:
ein Fehlen offener Aufgaben in dem offenen Aufgabendatensatz zu bestimmen, die dem ersten Benutzer zugeordnet sind; und
zur Wiedergabe auf mindestens einer akustischen Vorrichtung ein akustisches Endsignal zu übertragen, das eine Benachrichtigung darstellt, dass die verteilten Aufgaben, die dem offenen Aufgabendatensatz zugeordnet sind, abgeschlossen sind.

6. System (100) nach einem der vorhergehenden Ansprüche, wobei der offene Aufgabendatensatz einem maximalen Zeitschwellenwert zugeordnet ist, und wobei die von einem Prozessor ausführbaren Anweisungen, wenn sie ausgeführt werden, den Prozessor ferner veranlassen:
zu bestimmen, dass der offene Aufgabendatensatz für eine Zeit hängig bzw. bevorstehend ist, die größer als der maximale Zeitschwellenwert ist; und
an mindestens eine der Vielzahl von netzwerkverbundenen akustischen Vorrichtungen (120) oder eine entfernte Vorrichtung (130) ein Zeitsignal zu senden, das eine Benachrichtigung darstellt, dass mindestens eine offene Aufgabe, die dem offenen Aufgabendatensatz zugeordnet ist, überfällig ist.

7. System (100) nach einem der vorhergehenden Ansprüche, wobei der offene Aufgabendatensatz aufeinanderfolgende Aufgabenabschnitte enthält, die aufeinanderfolgend geordneten Einrichtungszonen zugeordnet sind, und wobei die von einem Prozessor ausführbaren Anweisungen, wenn sie ausgeführt werden, den Prozessor ferner veranlassen:
zu bestimmen, dass einer offenen Aufgabe, die einer verdächtigen Einrichtungszone zugeordnet ist, eine abgeschlossene Aufgabe vorausgeht, die einer vorherigen Einrichtungszone zugeordnet ist, und eine abgeschlossene Aufgabe, die einer nachfolgenden Einrichtungszone zugeordnet ist, nachfolgt; und
an mindestens eine der Vielzahl von netzwerkverbundenen akustischen Vorrichtungen (120) ein Signal für eine verpasste Aufgabe zu senden, das eine Benachrichtigung darstellt, dass eine Aufgabe in der verdächtigen Einrichtungszone verpasst wurde.

8. Verfahren zum Verfolgen einer verteilten Aufgabe an einer Einrichtung, wobei die Einrichtung zwei oder mehr Einrichtungszonen umfasst, wobei jede Einrichtungszone einer jeweiligen akustischen Vorrichtung einer Vielzahl von netzwerkverbundenen akustischen Vorrichtungen (120), die über ein Netzwerk (150) mit einem Server (110) kommunizieren, zugeordnet ist, wobei das Verfahren Folgendes aufweist:
Empfangen eines ersten Signals, das erste Spracheingabedaten darstellt, an dem Server (110) von einer der Vielzahl von netzwerkverbundenen akustischen Vorrichtungen (120);
Bestimmen, dass das erste Signal von einer ersten akustischen Vorrichtung (120a) empfangen wird, die einer ersten Einrichtungszone zugeordnet ist;
Bestimmen, dass die ersten Spracheingabedaten einem ersten Benutzer zugeordnet sind, indem Sprachdruck- oder Spracherkennungsoperationen auf der Grundlage von gespeicherten Sprachproben durchgeführt werden, die dem ersten Benutzer zugeordnet sind;
Identifizieren eines offenen Aufgabendatensatzes, der dem ersten Benutzer zugeordnet ist, wobei der offene Aufgabendatensatz mindestens einen offenen Aufgabendatensatz enthält, der der ersten Einrichtungszone zugeordnet ist;
Aktualisieren des offenen Aufgabendatensatzes auf der Grundlage der ersten Spracheingabedaten, die der ersten Einrichtungszone zugeordnet sind;
wodurch bzw. wobei
die jeweilige akustische Vorrichtung eine Mikrofonvorrichtung enthält, die eine akustische Eingabe empfängt, und
**dadurch gekennzeichnet, dass**
die jeweilige akustische Vorrichtung Folgendes enthält:
einen Ausgangswandler zur Wiedergabe von akustischen Signalen, und wobei das Verfahren ferner Folgendes aufweist:
Empfangen eines zweiten Signals, das eine Abfrage nach einem vorherigen Status darstellt;
Bestimmen, dass das zweite Signal von der ersten akustischen Vorrichtung (120a) empfangen ist, die der ersten Einrichtungszone zugeordnet ist; und
Senden eines akustischen Signals, das den vorherigen Status darstellt, zur Wiedergabe durch die erste akustische Vorrichtung (120a) der der ersten Einrichtungszone zugeordnet ist.

9. Verfahren nach Anspruch 8, wobei die ersten Spracheingabedaten eine Spracheingabe enthalten, die angibt, dass die erste Einrichtungszone gesichert und/oder ungesichert ist.

10. Verfahren nach Anspruch 8 oder 9, wobei das Verfahren ferner Folgendes aufweist:
Bestimmen eines Fehlens offener Aufgaben in dem offenen Aufgabendatensatz, die dem ersten Benutzer zugeordnet sind; und
Senden eines akustischen Endsignals, das eine Benachrichtigung, dass die verteilten Aufgaben, die dem offenen Aufgabendatensatz zugeordnet sind, abgeschlossen sind, darstellt, zur Wiedergabe auf mindestens einer akustischen Vorrichtung.

11. Nichtflüchtiges von einem Computer lesbares Speichermedium, das Anweisungen zum Verfolgen einer verteilten Aufgabe an einer Einrichtung speichert, wobei die Einrichtung zwei oder mehr Einrichtungszonen umfasst, wobei jede Einrichtungszone einer jeweiligen akustischen Vorrichtung einer Vielzahl von netzwerkverbundenen akustischen Vorrichtungen (120) zugeordnet ist, wobei die Anweisungen, wenn sie durch einen Prozessor eines Servers ausgeführt werden, der mit der Vielzahl von netzwerkverbundenen akustischen Vorrichtungen (120) kommuniziert, den Server (110) veranlassen:
von einer der Vielzahl von netzwerkverbundenen akustischen Vorrichtungen (120) ein erstes Signal zu empfangen, das erste Spracheingabedaten darstellt;
zu bestimmen, dass das erste Signal von einer ersten akustischen Vorrichtung (120a) empfangen ist, die einer ersten Einrichtungszone zugeordnet ist;
zu bestimmen, dass die ersten Spracheingabedaten einem ersten Benutzer zugeordnet sind, indem Sprachdruck- oder Spracherkennungsoperationen auf der Grundlage von gespeicherten Sprachproben durchgeführt werden, die dem ersten Benutzer zugeordnet sind;
einen offenen Aufgabendatensatz zu identifizieren, der dem ersten Benutzer zugeordnet ist, wobei der offene Aufgabendatensatz mindestens eine offene Aufgabe enthält, die der ersten Einrichtungszone zugeordnet ist;
den offenen Aufgabendatensatz auf der Grundlage der ersten Spracheingabedaten zu aktualisieren, die der ersten Einrichtungszone zugeordnet sind;
wodurch bzw. wobei
die jeweilige akustische Vorrichtung eine Mikrofonvorrichtung enthält, die eine akustische Eingabe empfängt, und
**dadurch gekennzeichnet, dass**
die jeweilige akustische Vorrichtung Folgendes enthält:
einen Ausgangswandler zur Wiedergabe von akustischen Signalen, und
die Anweisungen, wenn sie durch den Prozessor des Servers (110) ausgeführt werden, der mit der Vielzahl von netzwerkverbundenen akustischen Vorrichtungen (120) kommuniziert, den Server (110) ferner veranlassen:
ein zweites Signal zu empfangen, das eine Abfrage nach einem vorherigen Status darstellt;
zu bestimmen, dass das zweite Signal von der ersten akustischen Vorrichtung (120a) empfangen ist, die der ersten Einrichtungszone zugeordnet ist;
den vorherigen Status, welcher der ersten Einrichtungszone zugeordnet ist, auf der Grundlage eines bestehenden Datensatzes zu bestimmen; und
zur Wiedergabe durch die erste akustische Vorrichtung (120a) ein akustisches Signal zu übertragen, das den vorherigen Status darstellt, der der ersten Einrichtungszone zugeordnet ist.

## Revendications

1. Système (100) pour suivre une tâche distribuée au niveau d'une installation, le système incluant un serveur (110) et une pluralité de dispositifs acoustiques connectés en réseau (120) communiquant avec le serveur (110) via un réseau (150), l'installation incluant deux zones d'installation ou plus, chaque zone d'installation respective étant associée à un dispositif acoustique respectif de la pluralité de dispositifs acoustiques connectés en réseau (120), le serveur (110) comprenant :
un module de communication ;
un processeur couplé au module de communication ; et
une mémoire couplée au processeur stockant des instructions exécutables par processeur qui, lorsqu'elles sont exécutées, amènent le processeur à :
recevoir, à partir de l'un de la pluralité de dispositifs acoustiques connectés en réseau (120), un premier signal représentant des premières données d'entrée vocale ;
déterminer que le premier signal est reçu à partir d'un premier dispositif acoustique (120a) associé à une première zone d'installation ;
déterminer que les premières données d'entrée vocale sont associées à un premier utilisateur en effectuant des opérations d'impression vocale ou de reconnaissance vocale sur la base d'échantillons vocaux stockés associés au premier utilisateur ;
identifier un enregistrement de tâche ouverte associé au premier utilisateur, l'enregistrement de tâche ouverte incluant au moins une tâche ouverte associée à la première zone d'installation ;
mettre à jour l'enregistrement de tâche ouverte sur la base des premières données d'entrée vocale associées à la première zone d'installation ;
moyennant quoi
le dispositif acoustique respectif inclut un dispositif de microphone qui reçoit une entrée acoustique et
**caractérisé en ce que**
le dispositif acoustique respectif inclut un transducteur de sortie pour la lecture de signaux acoustiques, et
la mémoire couplée au processeur stocke des instructions exécutables par processeur qui, lorsqu'elles sont exécutées, amènent en outre le processeur à :
recevoir un second signal représentant une requête pour un état précédent ;
déterminer que le second signal est reçu à partir du premier dispositif acoustique (120a) associé à la première zone d'installation ;
déterminer l'état précédent associé à la première zone d'installation sur la base d'un enregistrement de données existant ; et
transmettre, pour la lecture par le premier dispositif acoustique (120a), un signal acoustique représentant l'état précédent associé à la première zone d'installation.

2. Système (100) selon la revendication 1, dans lequel l'enregistrement de tâche ouverte inclut deux tâches ou plus, chaque tâche respective étant associée à une zone d'installation respective.

3. Système (100) selon l'une quelconque des revendications précédentes, dans lequel les premières données d'entrée vocale incluent une entrée vocale indiquant que la première zone d'installation est au moins l'une parmi sécurisée ou non sécurisée, et dans lequel les premières données d'entrée vocale sont reçues à partir d'au moins l'un parmi un garde de sécurité ou un utilisateur d'opérateur de bâtiment.

4. Système (100) selon la revendication 3, dans lequel les instructions exécutables par processeur, lorsqu'elles sont exécutées, amènent en outre le processeur à :
déterminer que la première zone d'installation est non sécurisée sur la base des premières données d'entrée vocale ; et
transmettre, à un dispositif distant, une notification que la première zone d'installation est non sécurisée.

5. Système (100) selon l'une quelconque des revendications précédentes, dans lequel les instructions exécutables par processeur, lorsqu'elles sont exécutées, amènent en outre le processeur à :
déterminer une absence de tâches ouvertes dans l'enregistrement de tâche ouverte qui est associé au premier utilisateur ; et
transmettre, pour la lecture sur au moins un dispositif acoustique, un signal acoustique final représentant une notification que les tâches distribuées associées à l'enregistrement de tâche ouverte sont terminées.

6. Système (100) selon l'une quelconque des revendications précédentes, dans lequel l'enregistrement de tâche ouverte est associé à un seuil de temps maximal, et dans lequel les instructions exécutables par processeur, lorsqu'elles sont exécutées, amènent en outre le processeur à :
déterminer que l'enregistrement de tâche ouverte est en attente pendant un temps supérieur au seuil de temps maximal ; et
transmettre, à au moins l'un de la pluralité de dispositifs acoustiques connectés en réseau (120) ou à un dispositif distant (130), un signal de temps représentant une notification qu'au moins une tâche ouverte associée à l'enregistrement de tâche ouverte est en retard.

7. Système (100) selon l'une quelconque des revendications précédentes, dans lequel l'enregistrement de tâche ouverte inclut des parties de tâche successives associées à des zones d'installation ordonnées consécutivement, et dans lequel les instructions exécutables par processeur, lorsqu'elles sont exécutées, amènent en outre le processeur à :
déterminer qu'une tâche ouverte associée à une zone d'installation suspecte est précédée d'une tâche terminée associée à une zone d'installation antérieure et est suivie d'une tâche terminée associée à une zone d'installation successive ; et
transmettre, à au moins l'un de la pluralité de dispositifs acoustiques connectés en réseau (120), un signal de tâche manquée représentant une notification qu'une tâche a été manquée dans la zone d'installation suspecte.

8. Procédé de suivi d'une tâche distribuée au niveau d'une installation, l'installation incluant deux zones d'installation ou plus, chaque zone d'installation étant associée à un dispositif acoustique respectif d'une pluralité de dispositifs acoustiques connectés en réseau (120) communiquant avec un serveur (110) via un réseau (150), le procédé comprenant :
la réception, au niveau du serveur (110), d'un premier signal représentant des premières données d'entrée vocale à partir de l'un de la pluralité de dispositifs acoustiques connectés en réseau (120) ;
la détermination que le premier signal est reçu à partir d'un premier dispositif acoustique (120a) associé à une première zone d'installation ;
la détermination que les premières données d'entrée vocale sont associées à un premier utilisateur en effectuant des opérations d'impression vocale ou de reconnaissance vocale sur la base d'échantillons vocaux stockés associés au premier utilisateur ;
l'identification d'un enregistrement de tâche ouverte associé au premier utilisateur, l'enregistrement de tâche ouverte incluant au moins un enregistrement de tâche ouverte associé à la première zone d'installation ;
la mise à jour de l'enregistrement de tâche ouverte sur la base des premières données d'entrée vocale associées à la première zone d'installation ;
moyennant quoi
le dispositif acoustique respectif inclut un dispositif de microphone qui reçoit une entrée acoustique et
**caractérisé en ce que**
le dispositif acoustique respectif inclut
un transducteur de sortie pour la lecture de signaux acoustiques, et
le procédé comprend en outre :
la réception d'un second signal représentant une requête pour un état précédent ;
la détermination que le second signal est reçu à partir du premier dispositif acoustique (120a) associé à la première zone d'installation ; et
la transmission, pour la lecture par le premier dispositif acoustique (120a), d'un signal acoustique représentant l'état précédent associé à la première zone d'installation.

9. Procédé selon la revendication 8, dans lequel les premières données d'entrée vocale incluent une entrée vocale indiquant que la première zone d'installation est au moins l'une parmi sécurisée ou non sécurisée.

10. Procédé selon la revendication 8 ou 9, le procédé comprenant en outre :
la détermination d'une absence de tâches ouvertes dans l'enregistrement de tâche ouverte qui est associé au premier utilisateur ; et
la transmission, pour la lecture sur au moins un dispositif acoustique, d'un signal acoustique final représentant une notification que les tâches distribuées associées à l'enregistrement de tâche ouverte sont terminées.

11. Support de stockage non transitoire lisible par ordinateur stockant des instructions pour suivre une tâche distribuée au niveau d'une installation, l'installation incluant deux zones d'installation ou plus, chaque zone d'installation étant associée à un dispositif acoustique respectif d'une pluralité de dispositifs acoustiques connectés en réseau (120), instructions, lorsqu'elles sont exécutées par un processeur d'un serveur communiquant avec la pluralité de dispositifs acoustiques connectés en réseau (120), amenant le serveur (110) à :
recevoir, à partir de l'un de la pluralité de dispositifs acoustiques connectés en réseau (120), un premier signal représentant des premières données d'entrée vocale ;
déterminer que le premier signal est reçu à partir d'un premier dispositif acoustique (120a) associé à une première zone d'installation ;
déterminer que les premières données d'entrée vocale sont associées à un premier utilisateur en effectuant des opérations d'impression vocale ou de reconnaissance vocale sur la base d'échantillons vocaux stockés associés au premier utilisateur ;
identifier un enregistrement de tâche ouverte associé au premier utilisateur, l'enregistrement de tâche ouverte incluant au moins une tâche ouverte associée à la première zone d'installation ;
mettre à jour l'enregistrement de tâche ouverte sur la base des premières données d'entrée vocale associées à la première zone d'installation ;
moyennant quoi
le dispositif acoustique respectif inclut un dispositif de microphone qui reçoit une entrée acoustique et
**caractérisé en ce que**
le dispositif acoustique respectif inclut
un transducteur de sortie pour la lecture de signaux acoustiques, et
les instructions, lorsqu'elles sont exécutées par le processeur du serveur (110) communiquant avec la pluralité de dispositifs acoustiques connectés en réseau (120), amènent en outre le serveur (110) à :
recevoir un second signal représentant une requête pour un état précédent ;
déterminer que le second signal est reçu à partir du premier dispositif acoustique (120a) associé à la première zone d'installation ;
déterminer l'état précédent associé à la première zone d'installation sur la base d'un enregistrement de données existant ; et
transmettre, pour la lecture par le premier dispositif acoustique (120a), un signal acoustique représentant l'état précédent associé à la première zone d'installation.
